# EUROPEAN PATENT SPECIFICATION

(11) **EP 3 398 670 B1**
(45) Date of publication and mention of the grant of the patent: **30.12.2020**
(21) Application number: 18170541.9
(22) Date of filing: 03.05.2018
(51) Int. Cl.: B01D 19/00, F02M 37/20, F02M 33/00, F02M 37/44, F02M 37/22

(54) **VACUUM SYSTEMS FOR DEGASSING OF LIQUID HYDROCARBON FUELS**
VAKUUMSYSTEME ZUR ENTGASUNG VON FLÜSSIGEN KOHLENWASSERSTOFFBRENNSTOFFEN
SYSTÈMES À VIDE POUR DÉGAZER DES COMBUSTIBLES HYDROCARBONÉS LIQUIDES

(30) Priority: 05.05.2017 US 201715587669
(43) Date of publication of application: 07.11.2018
(73) Proprietor: Hamilton Sundstrand Corporation, Charlotte, NC 28217-4578 (US)
(72) Inventor: RHEAUME, Jonathan, West Hartford, Connecticut 06119 (US); CORDATOS, Haralambos, Colchesster, Connecticut 06415 (US)
(74) Representative: Dehns

(56) References cited:
- EP-B1- 1 000 238
- WO-A1-2009/118067
- US-A1- 2005 000 495
- US-A1- 2007 101 974
- US-B2- 7 601 203

## Description

### BACKGROUND

The subject matter disclosed herein generally relates to the field of vacuum systems for a fuel degassing unit for an internal combustion, and more particularly to an apparatus and method for generating a vacuum utilized in removing dissolved gases from a fuel stream.

A fuel degassing unit reduces the amount of gasses dissolved within fuel for an internal combustion engine. In one example, by removing gases like oxygen, it increases the maximum allowable temperature of the fuel and allows the fuel to be used as a heat sink. One method of removing dissolved oxygen from fuels is by using a semipermeable membrane de-oxygenator. In a membrane de-oxygenator, fuel is pumped over an oxygen permeable membrane. As the fuel passes over the membrane, a partial oxygen pressure differential across the membrane promotes the transport of oxygen out of the fuel through the membrane. A vacuum is one means of generating the required partial oxygen pressure differential described above for fuel degassing. Typically, deeper vacuum is created using multiple stages of vacuum pump heads and of vacuum pumps.

US 7,601,203 B2 relates to a vacuum system for a fuel stabilization unit (FSU) for a gas turbine engine.

Fuel degassing will be of increasing importance on next generation aircraft engines, marine engines, stationary power engines, vehicle engines, and diesel engines as heat loads increase due to additional electronic equipment. An apparatus and method for increasing the efficiency and reliability of vacuum sources in a fuel degassing unit providing is greatly desired.

### BRIEF SUMMARY

The invention is a fuel system according to claim 1.

In addition to one or more of the features described above, or as an alternative, further embodiments of the fuel system may include where the vacuum generation device includes at least two operating fluid-free vacuum pumps oriented in parallel.

In addition to one or more of the features described above, or as an alternative, further embodiments of the fuel system may include where the vacuum generation device includes at least two operating fluid-free vacuum pumps oriented in series.

In addition to one or more of the features described above, or as an alternative, further embodiments of the fuel system may include where the vacuum generation device includes at least one ejector.

In addition to one or more of the features described above, or as an alternative, further embodiments of the fuel system may include where the ejector and the operating fluid free vacuum pump are oriented in series.

In addition to one or more of the features described above, or as an alternative, further embodiments of the fuel system may include where the ejector and the operating fluid free vacuum pump are oriented in parallel.

In addition to one or more of the features described above, or as an alternative, further embodiments of the fuel system may include at least one operating fluid vacuum pump that operates with an operating fluid, wherein at least one operating fluid-free vacuum pump fluidly connects the operating fluid vacuum pump and the fuel degassing unit.

In addition to one or more of the features described above, or as an alternative, further embodiments of the fuel system may include a brake booster fluidly interjected between the operating fluid vacuum pump and the operating fluid-free pump.

In addition to one or more of the features described above, or as an alternative, further embodiments of the fuel system may include a brake booster fluidly interjected between the operating fluid-free pumps in series.

In addition to one or more of the features described above, or as an alternative, further embodiments of the fuel system may include a brake booster fluidly interjected between the ejector and the operating fluid-free pumps.

In addition to one or more of the features described above, or as an alternative, further embodiments of the fuel system may include where the selected species include at least one of oxygen, nitrogen, carbon dioxide, water vapor, and hydrocarbon vapor.

In addition to one or more of the features described above, or as an alternative, further embodiments of the fuel system may include where the vacuum generation device is enclosed within a thermally managed container.

In addition to one or more of the features described above, or as an alternative, further embodiments of the fuel system may include where the vacuum generation device and the fuel degassing unit are enclosed within a thermally managed container.

In addition to one or more of the features described above, or as an alternative, further embodiments of the fuel system may include where the operating fluid free-vacuum pump is at least one of a diaphragm vacuum pump, a rocking piston vacuum pump, a scroll vacuum pump, a roots vacuum pump, a parallel screw vacuum pump, a claw type vacuum pump, and a rotary vane vacuum pump.

In addition to one or more of the features described above, or as an alternative, further embodiments of the fuel system may include where fuel absorbs heat from the vacuum generation device.

In addition to one or more of the features described above, or as an alternative, further embodiments of the fuel system may include where the at least one operating fluid-free vacuum pump is driven by an electric motor.

Herein is described a method of assembling a fuel system is provided. The method comprising: providing an engine that in operation consumes fuel; providing a fuel tank that in operation supplies fuel to the engine; fluidly connecting a fuel degassing unit to each of the engine and the fuel tank, the fuel degassing unit fluidly connects the engine to the fuel tank, wherein the fuel degassing unit in operation separates selected species from the fuel; and operably connecting a vacuum generation device to the fuel degassing unit, the vacuum generation device in operation generates a vacuum to remove the selected species from the fuel degassing unit; wherein the vacuum generation device comprises at least one operating fluid-free vacuum pump that operates without an operating fluid.

In addition to one or more of the features described above, or as an alternative, further embodiments of the method may include where the operating fluid free-vacuum pump is at least one of a diaphragm vacuum pump, a rocking piston vacuum pump, a scroll vacuum pump, a roots vacuum pump, a parallel screw vacuum pump, a claw type vacuum pump, and a rotary vane vacuum pump.

In addition to one or more of the features described above, or as an alternative, further embodiments of the method may include inserting a semipermeable membrane into the fuel degassing unit, the semipermeable membrane in operation filters selected species out of the fuel.

Technical effects of embodiments of the present disclosure include a fuel system utilizing an operating fluid-free vacuum pump to remove selected dissolved gaseous species from fuel.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION

The following descriptions should not be considered limiting in any way. With reference to the accompanying drawings, like elements are numbered alike:
FIG. 1 illustrates a schematic view of a fuel system, in accordance with an embodiment of the disclosure;
FIG. 2 illustrates a schematic view of a fuel system, in accordance with an embodiment of the disclosure;
FIG. 3 illustrates a schematic view of a fuel system, in accordance with an embodiment of the disclosure;
FIG. 4 illustrates a schematic view of a fuel system, in accordance with an embodiment of the disclosure;
FIG. 5 illustrates a schematic view of a fuel system, in accordance with an embodiment of the disclosure; and
FIG. 6 is a flow diagram illustrating a method of assembling a fuel system, according to an embodiment of the present disclosure.

### DETAILED DESCRIPTION

A detailed description of one or more embodiments of the disclosed apparatus and method are presented herein by way of exemplification and not limitation with reference to the Figures.

Various embodiments of the present disclosure are related to the removal of selected dissolved gaseous species (e.g. oxygen, carbon dioxide, water vapor...etc.) from fuel. The selected dissolved gaseous species may be referred to as selected species for short. In one example, fuel serves as a heat sink on some aircraft and cars by absorbing heat from engine accessories. At high temperature, however, the fuel reacts with dissolved oxygen to form solid carbonaceous deposits ("varnish" or "lacquering") in the fuel passages. The deposits can foul surfaces for heat exchange and clog fuel system components. When fuel is heated above approximately 394.261 Kelvin (250°F), the increased rate of these auto-oxidation reactions shortens typical fuel system maintenance intervals. Further, water in fuel may also be problematic because water degrades the heating value of fuel. Water can also freeze in the fuel system and block fuel flow. Water can also allow microorganisms to grow in fuel that can occlude flow of fuel and whose metabolic byproducts contribute to corrosion of fuel system components. Additionally, carbon dioxide in fuel may also be problematic. Carbon dioxide in fuel can cause vapor lock under certain conditions. Vapor lock is the undesired presence of gases and vapors in the fuel system that can adversely affect delivery of fuel to the engine. Many viable fuel degassing technologies require a vacuum source in order to remove dissolved oxygen and other selected species. The vacuum source removes the dissolved selected species by transporting the selected species through a semipermeable membrane.

Rotary vane vacuum pumps may be used, but tend to be heavy and require regular maintenance (oil changes) due to operating fluids such as oil. Also, over extended operating periods, oil from the rotary vane vacuum pump has been found to diffuse upstream and eventually reach the backside of the semipermeable membrane, resulting in gradual performance decline of the semipermeable membrane. In addition, some operating fluids such as oils are hygroscopic, which requires more frequent oil changes and thus increases operating costs. Further, in one aircraft example, a hydrocarbon fuel can contain up to 200 mg of dissolved water per kg of fuel. Thus, with the about 2,500 kg/hr typical fuel consumption of a single-aisle aircraft, up to 0.5 kg/hr of water vapor may be processed by the vacuum pump. Unless properly addressed, water can condense and flood the pump cavity and thereby severely degrade vacuum pump performance. Embodiments disclosed herein seek to address the operating fluid (e.g. oil) mitigation and water build up matters associated with current technology being used in fuel degassing systems.

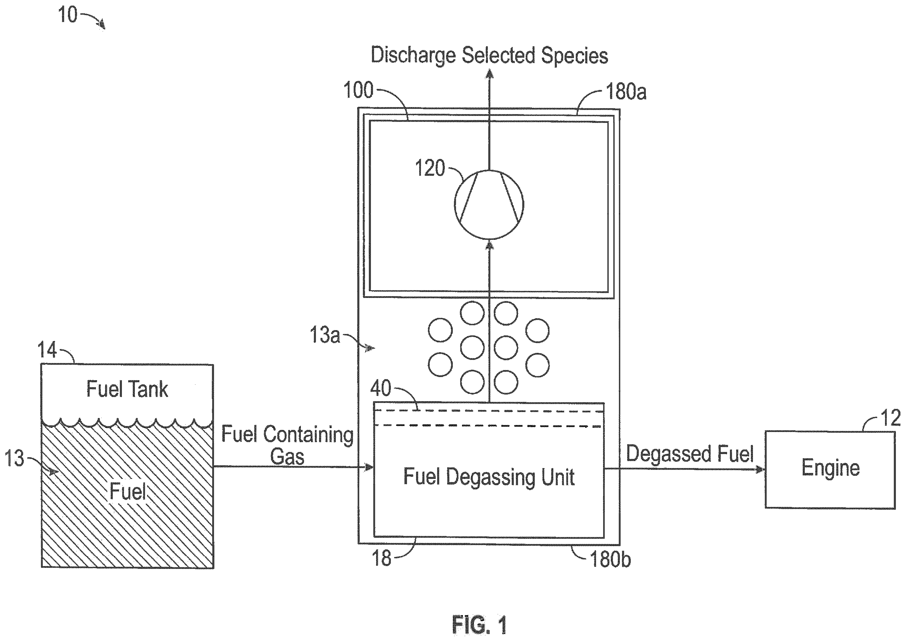

FIG. 1-5 depicts a fuel system 10 in example embodiments. The fuel system 10 includes an engine 12, a fuel tank 14, a fuel degassing unit 40, and a vacuum generation device 100. The engine 12 is an internal combustion engine 12 that in operation consumes fuel 13. The engine 12 may be an internal combustion engine 12, such as, for example, a gas turbine engine, a reciprocating engine, or any other engine known to one of skill in the art. In one example, the engine 12 may be a jet engine on an aircraft. In another example, the engine 12 may be an internal combustion engine within a car. The fuel tank 14 supplies fuel 13 to the engine 12. The fuel degassing unit 14 fluidly connects the engine 12 to the fuel tank 14. Thus, the fuel 13 travels from the fuel tank 14 through the fuel degassing unit 18 to the engine 12. The fuel degassing unit 14 in operation removes selected species 13a from the fuel 13. In an embodiment, a semipermeable membrane 40 may be located within the fuel degassing unit 18. When fuel 13 is flowing through the fuel degassing unit 18 selected species 13a are allowed to pass through the semipermeable membrane 40 and thus removed from the fuel 13. The selected species 13a filtered out may include at least one of oxygen, nitrogen, carbon dioxide, water vapor, and hydrocarbon vapor. Thus, fuel 13 enters the fuel degassing unit 40 containing gas and then degassed fuel 13 exits the fuel degassing unit 18. It is understood that methods and systems other than the semipermeable membrane 40 may be used to remove the selected species 13a within the fuel degassing unit 18.

The vacuum generation device 100 is operably connected to the fuel degassing unit 18. The vacuum generation device 100 in operation generates to remove the selected species from the degassing unit 18. In the invention, the vacuum generation device 100 in operation generates a vacuum across the semipermeable membrane 40 to enable filtration of the selected species 13a, thus pulling the selected species 13a through the semipermeable membrane 40. In the invention, vacuum generation device 100 comprises at least one operating fluid-free vacuum pump 120 that operates without an operating fluid. In various embodiments, the operating fluid-free vacuum pump 120 may be at least one of a diaphragm vacuum pump, a rocking piston vacuum pump, a scroll vacuum pump, a roots vacuum pump, a parallel screw vacuum pump, a claw type vacuum pump, and a rotary vane vacuum pump. The fluid-free vacuum pump 120 can be driven by various power sources. In an embodiment, an electric motor drives the fluid-free vacuum pump 120. In another embodiment, mechanical power from an engine transmitted via a shaft, belt or gear(s) drives the fluid-free vacuum pump 120. Similarly, a hydraulic motor or a pneumatic motor can provide power to the fluid-free vacuum pump 120. Advantageously, by utilizing an operating fluid-free vacuum pump 120 instead of an operating fluid vacuum pump 130 next to the semipermeable membrane 40 the risk is reduced of the semipermeable membrane 40 being unintentionally coated in an operating fluid such as oil, which degrades the performance of the semipermeable membrane 40. The operating fluid vacuum pump 130 contains an operating fluid that may be used as a lubricant or sealant, such as, for example oil.

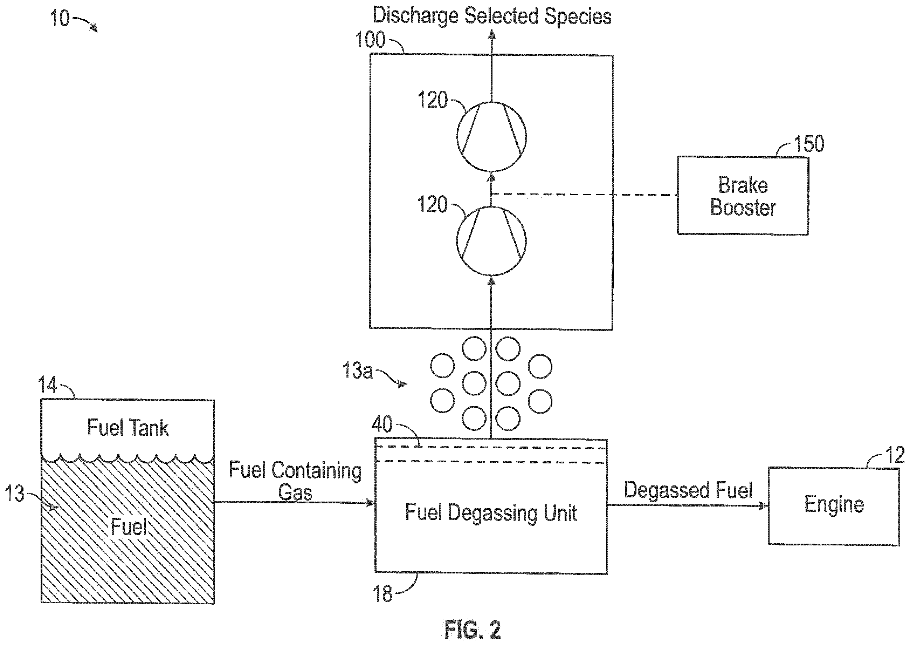

In an embodiment, the vacuum generation device 100 may be enclosed within a thermally managed container 180a, as seen in FIG. 1. In another embodiment, the vacuum generation device 100 and the fuel degassing unit 18 may be enclosed within a thermally managed container 180b, as seen in FIG. 1. It is understood that while the thermally managed containers 180a, 180b are only illustrated in FIG. 1 they are applicable to any other configuration illustrated for the vacuum generation device 100 in FIGs. 2-5 and any other configuration for the vacuum generation device 100 not illustrated herein. Advantageously, thermal management of the vacuum generation device 100 may assist with cold startup and to reject heat generated during operation of the system motor and drive. During cold startup, motor bearing grease viscosity may impede operation of the vacuum generation device 100. In one embodiment, the vacuum generation device 100 may be located in a climate-controlled location. Optionally, the system may be outfitted with any combination of insulation, cooling devices including fuel-cooling and air-cooling, resistance heaters, heat exchangers, and other features to regulate temperature of the vacuum generation device 100 and its components. Further, the pump heads, motor, and motor drive of the vacuum generation device 100 may optionally be thermally managed individually or in aggregate. Additionally, fuel 13 may be used as a heat sink for the vacuum generation device 100, thus heat is transferred from the vacuum generation device 100 to the fuel 13. Preferably, fuel 13 that is used as a heat sink is bound for the engine 12 which advantageously increases the thermal efficiency of the engine 12. In another embodiment, fuel 13 that is used as a heat sink is returned to fuel tank 14. In an embodiment, the thermally managed container 180a, 180b transfers heat from the vacuum generation device 100 to the fuel 13 within the fuel tank 14.

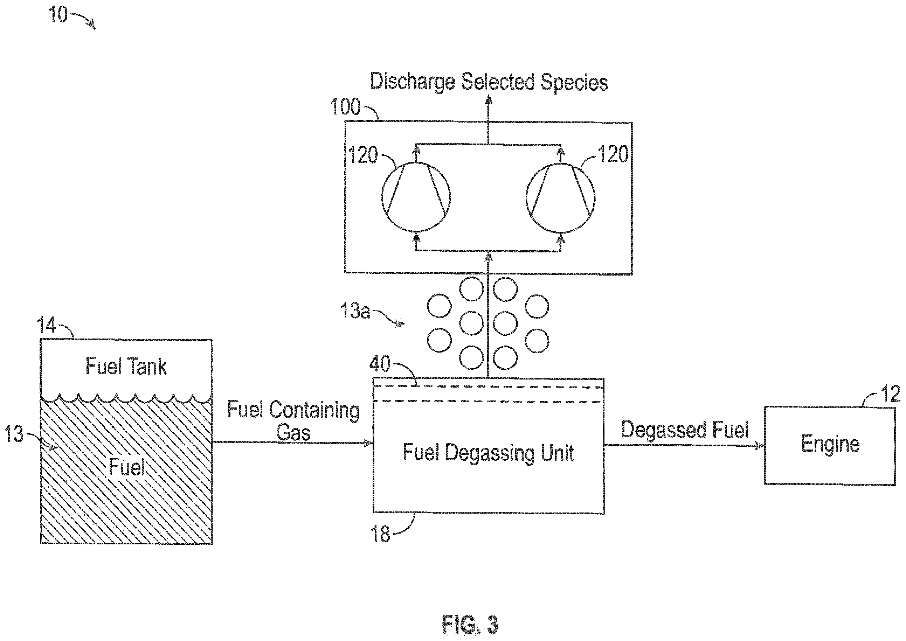

FIGs. 1-5 display various embodiments of different possible configurations for the vacuum generation device 100 within the fuel system 10. As seen in FIG. 1, the vacuum generation device 100 may comprise a single operating fluid-free pump 120. Alternatively, the vacuum generation device 100 may comprise one or more operating fluid-free vacuum pumps 120. As seen in FIG. 2, the operating fluid-free pumps 120 may be oriented in series. In an embodiment, a brake booster 150 may be fluidly interjected between the operating fluid-free vacuum pumps 120 oriented in series. The brake booster 150 allows vacuum pressure created in the vacuum generation device 100 to be applied to the brake system of a vehicle and/or an aircraft in a non-limiting example. It is understood that one or more operating fluid-free vacuum pumps 120 may be utilized without the brake booster 150. In an embodiment, multiple stages of a fluid-free vacuum pumps 120 may be utilized to achieve the proper volume flow and pressure required. As seen in FIG. 3, the operating fluid-free vacuum pumps 120 may be oriented in parallel. Alternately, at least one operating fluid-free vacuum pump 120 may be oriented in parallel with an operating fluid vacuum pump 130.

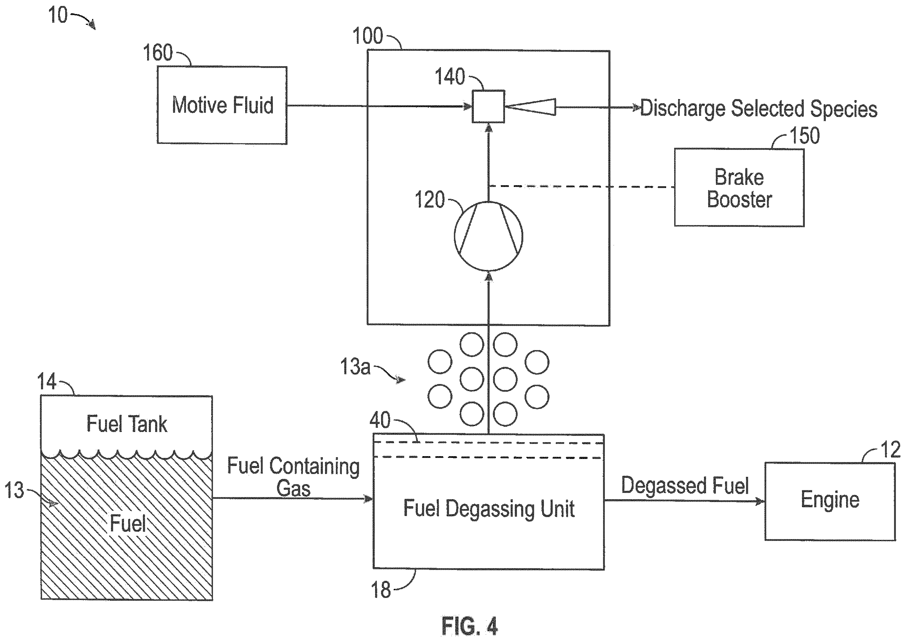

Further, as seen in FIG. 4, the vacuum generation device 100 may include an ejector 140. FIG. 140 shows the ejector 140 in series with the operating fluid-free vacuum pump 120 however the ejector 140 may also be placed in parallel with the operating fluid-free pump 120 as well. The ejector 140 utilizes a motive fluid 160 to passively create a vacuum. The motive fluid 160 may be a pressurized fluid, such as, for example bleed air from an air turbine engine. In an embodiment, at least one operating fluid-free vacuum pump 120 is located in between the semipermeable membrane 40 and the ejector 140. In an embodiment, a brake booster 150 may be fluidly interjected between the operating fluid-free vacuum pump 120 and the ejector 140, as seen in FIG. 4. It is understood that one or more ejectors 140 may be utilized without the brake booster 150. In an embodiment, multiple stages of an ejector pump may be utilized to achieve the proper volume flow and pressure required.

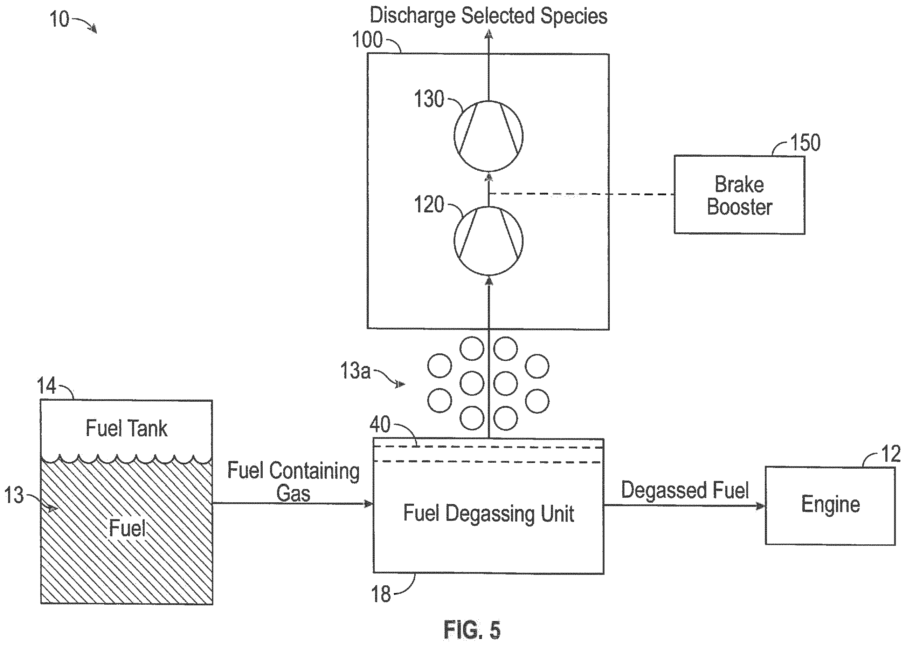

In an alternative embodiment seen in FIG. 5, the vacuum generation device 100 may include an operating fluid vacuum pump 130 to assist an operating fluid-free vacuum pump 120 in creating the vacuum. In an embodiment, the operating fluid-free vacuum pump 120 is located in between the operating fluid vacuum130 and the semipermeable membrane 40. Advantageously, locating the operating fluid-free vacuum pump 120 between the operating fluid vacuum 130 and the semipermeable membrane 40 helps prevent operating fluid migration from the operating fluid vacuum 130 to the semipermeable membrane 40, thus extending the life of the semipermeable membrane 40. In an embodiment, a brake booster 150 may be fluidly interjected between the operating fluid-free vacuum pump 120 and the operating fluid vacuum130, as seen in FIG. 5.

It is understood that the illustrated orientations of the operating fluid-free vacuum pumps 120, operating fluid vacuum pumps 130, and ejectors 140 in FIGs. 1-5 are for illustrative purposes and are not intended to be limiting, thus the vacuum generation device 100 may include any number of operating fluid-free pumps 120, operating fluid vacuum pumps 130, and ejectors 140 oriented in parallel and/or series. As appreciated by one of skill in the art, the orientation (parallel and/or series) may affect the pressure and volume flow achieved by the vacuum generation device 100. Each vacuum pump 120, 130 and ejector 140 may also have one or more internal stages to further adjust the pressure and volume flow created by the vacuum generation device 100. As also seen in FIGs. 1-5, after flowing through the vacuum generation device 100, the selected species 13a are discharged from the vacuum generation device 100. In an embodiment, the selected species 13a may be discharged into the engine 12 with the degassed fuel 13 for combustion. In another embodiment, the selected species 13a may be discharged into the exhaust of the engine 12 after the degassed fuel 13 has been combusted.

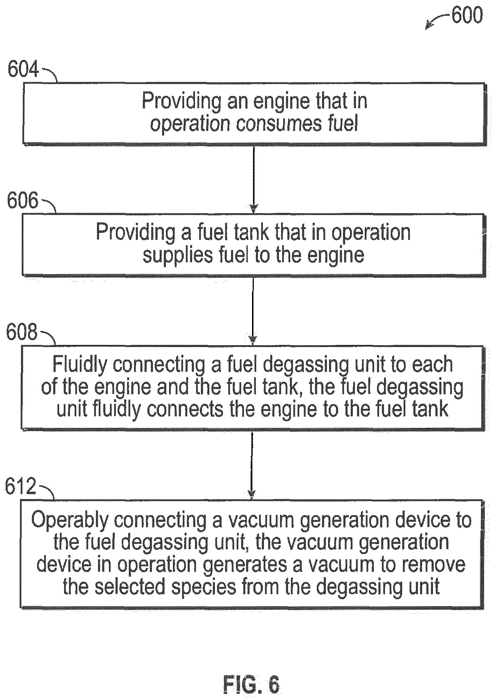

Referring now to FIG. 6, with continued reference to FIG 1-5. FIG. 6 shows a flow chart of method 600 of assembling a fuel system 10, in accordance with an embodiment of the disclosure. At block 604, an engine 12 that in operation consumes fuel 13 is provided. At block 606, a fuel tank 14 that in operation supplies fuel 13 to the engine 12 is provided. At block 608, a fuel degassing unit 18 is fluidly connected to each of the engine 12 and the fuel tank 14. The fuel degassing unit 18 fluidly connects the engine 12 to the fuel tank 14. A semipermeable membrane 40 may be inserted into the fuel degassing unit 18. The semipermeable membrane 40 in operation filters selected species 13a out of the fuel 13. At block 612, a vacuum generation device 100 is operably connected to the fuel degassing unit 18. The vacuum generation device 100 in operation generates a vacuum to remove selected species 18a from the degassing unit, as described above. As also described above, the vacuum generation device 100 comprises at least one operating fluid-free vacuum pump 120 that operates without an operating fluid, such as, for example, oil or optionally with an ejector 140.

While the above description has described the flow process of FIG. 6 in a particular order, it should be appreciated that unless otherwise specifically required in the attached claims that the ordering of the steps may be varied.

As described above, embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A fuel system (10) comprising:
an engine (12) configured to, in operation, consume fuel;
a fuel tank (14) configured to, in operation, supply fuel to the engine (12);
a fuel degassing unit (18) fluidly connecting the engine to the fuel tank, the fuel degassing unit (18) configured to, in operation, separate selected species from the fuel; and
a vacuum generation device (100) operably connected to the fuel degassing unit (18), the vacuum generation device configured to, in operation, generate a vacuum to remove the selected species from the fuel degassing unit; and **characterized in that**
wherein the vacuum generation device (100) comprises at least one operating fluid-free vacuum pump configured to, in operation, operate without an operating fluid; the fuel system further comprising
a semipermeable membrane within the fuel degassing unit (18), the semipermeable membrane configured to, in operation, filter selected species out of the fuel.

2. The fuel system of claim 1, wherein:
the vacuum generation device (100) includes at least two operating fluid-free vacuum pumps oriented in parallel.

3. The fuel system of claim 1, wherein:
the vacuum generation device (100) includes at least two operating fluid-free vacuum pumps oriented in series.

4. The fuel system of claim 1, 2 or 3, wherein:
the vacuum generation device (100) includes at least one ejector.

5. The fuel system of claim 4, wherein:
the ejector (140) and the operating fluid free vacuum pump are oriented in series.

6. The fuel system of claim 4, wherein:
the ejector (140) and the operating fluid free vacuum pump (120) are oriented in parallel.

7. The fuel system of any preceding claim, further comprising:
at least one operating fluid vacuum pump (130) configured to, in operation, operate with an operating fluid, wherein at least one operating fluid-free vacuum pump (120) fluidly connects the operating fluid vacuum pump (120) and the fuel degassing unit (18).

8. The fuel system of claim 7, further comprising:
a brake booster (150) fluidly interjected between the operating fluid vacuum pump (130) and the operating fluid-free pump (120).

9. The fuel system of claim 3, further comprising:
a brake booster fluidly interjected between the operating fluid-free pumps (120) in series.

10. The fuel system of claim 5, further comprising:
a brake booster (150) fluidly interjected between the ejector and the operating fluid-free pumps (120).

11. The fuel system of any preceding claim, wherein:
the vacuum generation device is enclosed within a thermally managed container.

12. The fuel system of any preceding claim, wherein:
the vacuum generation device (100) and the fuel degassing unit (18) are enclosed within a thermally managed container.

## Patentansprüche

1. Brennstoffsystem (10), umfassend:
ein Triebwerk (12), das konfiguriert ist, um in Betrieb Brennstoff zu verbrauchen;
einen Brennstofftank (14), der konfiguriert ist, um in Betrieb Brennstoff an das Triebwerk (12) zu liefern;
eine Brennstoffentgasungseinheit (18), die das Triebwerk fluidisch mit dem Brennstofftank verbindet, wobei die Brennstoffentgasungseinheit (18) konfiguriert ist, um in Betrieb ausgewählte Spezies von dem Brennstoff zu trennen; und
eine Vakuumerzeugungsvorrichtung (100), die mit der Brennstoffentgasungseinheit (18) wirkverbunden ist, wobei die Vakuumerzeugungsvorrichtung konfiguriert ist, um in Betrieb Vakuum zu erzeugen, um die ausgewählte Spezies von der Brennstoffentgasungseinheit zu entfernen; und **dadurch gekennzeichnet, dass**
wobei die Vakuumerzeugungsvorrichtung (100) zumindest eine arbeitsfluidfreie Vakuumpumpe umfasst, die konfiguriert ist, um in Betrieb ohne ein Arbeitsfluid zu arbeiten; wobei das Brennstoffsystem ferner eine halbdurchlässige Membran innerhalb der Brennstoffentgasungseinheit (18) umfasst, wobei die halbdurchlässige Membran konfiguriert ist, um in Betrieb ausgewählte Spezies aus dem Brennstoff zu filtern.

2. Brennstoffsystem nach Anspruch 1, wobei:
die Vakuumerzeugungsvorrichtung (100) zumindest zwei arbeitsfluidfreie Vakuumpumpen beinhaltet, die parallel ausgerichtet sind.

3. Brennstoffsystem nach Anspruch 1, wobei:
die Vakuumerzeugungsvorrichtung (100) zumindest zwei arbeitsfluidfreie Vakuumpumpen beinhaltet, die in Reihe ausgerichtet sind.

4. Brennstoffsystem nach Anspruch 1, 2 oder 3, wobei:
die Vakuumerzeugungsvorrichtung (100) zumindest eine Auswurfvorrichtung beinhaltet.

5. Brennstoffsystem nach Anspruch 4, wobei:
die Auswurfvorrichtung (140) und die arbeitsfluidfreie Vakuumpumpe in Reihe ausgerichtet sind.

6. Brennstoffsystem nach Anspruch 4, wobei:
die Auswurfvorrichtung (140) und die arbeitsfluidfreie Vakuumpumpe (120) parallel ausgerichtet sind.

7. Brennstoffsystem nach einem vorhergehenden Anspruch, ferner umfassend:
zumindest eine Arbeitsfluidvakuumpumpe (130), die konfiguriert ist, um in Betrieb mit einem Arbeitsfluid zu arbeiten, wobei zumindest eine arbeitsfluidfreie Vakuumpumpe (120) die Arbeitsfluidvakuumpumpe (120) und die Brennstoffentgasungseinheit (18) fluidisch verbindet.

8. Brennstoffsystem nach Anspruch 7, ferner umfassend:
einen Bremsverstärker (150), der fluidisch zwischen der Arbeitsfluidvakuumpumpe (130) und der arbeitsfluidfreien Pumpe (120) eingefügt ist.

9. Brennstoffsystem nach Anspruch 3, ferner umfassend:
einen Bremsverstärker, der fluidisch zwischen den arbeitsfluidfreien Pumpen (120) in Reihe eingefügt ist.

10. Brennstoffsystem nach Anspruch 5, ferner umfassend:
einen Bremsverstärker (150), der fluidisch zwischen der Auswurfvorrichtung und den arbeitsfluidfreien Pumpen (120) eingefügt ist.

11. Brennstoffsystem nach einem vorhergehenden Anspruch, wobei:
die Vakuumerzeugungsvorrichtung innerhalb eines thermisch verwalteten Behälters eingeschlossen ist.

12. Brennstoffsystem nach einem vorhergehenden Anspruch, wobei:
die Vakuumerzeugungsvorrichtung (100) und die Kraftstoffentgasungseinheit (18) innerhalb eines thermisch verwalteten Behälters eingeschlossen sind.

## Revendications

1. Système de combustible (10) comprenant :
un moteur (12) configuré pour, en fonctionnement, consommer un combustible ;
un réservoir de combustible (14) configuré pour, en fonctionnement, fournir un combustible au moteur (12) ;
une unité de dégazage de combustible (18) reliant fluidiquement le moteur au réservoir de combustible, l'unité de dégazage de combustible (18) étant configurée pour, en fonctionnement, séparer des espèces sélectionnées du combustible ; et
un dispositif de génération de vide (100) relié de manière fonctionnelle à l'unité de dégazage de combustible (18), le dispositif de génération de vide étant configuré pour, en fonctionnement, générer un vide pour éliminer les espèces sélectionnées de l'unité de dégazage de combustible ; et **caractérisé en ce que**
dans lequel le dispositif de génération de vide (100) comprend au moins une pompe à vide sans fluide de fonctionnement configurée pour, en fonctionnement, fonctionner sans fluide de fonctionnement ; le système de combustible comprenant en outre une membrane semi-perméable à l'intérieur de l'unité de dégazage de combustible (18), la membrane semi-perméable est configurée pour, en fonctionnement, filtrer des espèces sélectionnées hors du combustible.

2. Système de combustible selon la revendication 1, dans lequel :
le dispositif de génération de vide (100) comporte au moins deux pompes à vide sans fluide de fonctionnement orientées en parallèle.

3. Système de combustible selon la revendication 1, dans lequel :
le dispositif de génération de vide (100) comporte au moins deux pompes à vide sans fluide de fonctionnement orientées en série.

4. Système selon la revendication 1, 2 ou 3, dans lequel :
le dispositif de génération de vide (100) comporte au moins un éjecteur.

5. Système de combustible selon la revendication 4, dans lequel :
l'éjecteur (140) et la pompe à vide sans fluide de fonctionnement sont orientés en série.

6. Système de combustible selon la revendication 4, dans lequel :
l'éjecteur (140) et la pompe à vide sans fluide de fonctionnement (120) sont orientés en parallèle.

7. Système de combustible selon une quelconque revendication précédente, comprenant en outre :
au moins une pompe à vide avec fluide de fonctionnement (130) configurée pour, en fonctionnement, fonctionner avec un fluide de fonctionnement, dans lequel au moins une pompe à vide sans fluide de fonctionnement (120) relie fluidiquement la pompe à vide avec fluide de fonctionnement (120) et l'unité de dégazage de combustible (18).

8. Système de combustible selon la revendication 7, comprenant en outre :
un servofrein (150) interjecté fluidiquement entre la pompe à vide avec fluide de fonctionnement (130) et la pompe sans fluide de fonctionnement (120).

9. Système de combustible selon la revendication 3, comprenant en outre :
un servofrein interjecté fluidiquement entre les pompes sans fluide de fonctionnement (120) en série.

10. Système de combustible selon la revendication 5, comprenant en outre :
un servofrein (150) interjecté fluidiquement entre l'éjecteur et les pompes sans fluide de fonctionnement (120).

11. Système de combustible selon une quelconque revendication précédente, dans lequel :
le dispositif de génération de vide est enfermé à l'intérieur d'un récipient à gestion thermique.

12. Système de combustible selon une quelconque revendication précédente, dans lequel :
le dispositif de génération de vide (100) et l'unité de dégazage de combustible (18) sont enfermés à l'intérieur d'un récipient à gestion thermique.
